# EUROPEAN PATENT APPLICATION

(11) **EP 4 831 895 A1**
(43) Date of publication of application: **28.10.2026**
(21) Application number: 24905655.7
(22) Date of filing: 04.09.2024
(51) Int. Cl.: G06Q 30/02

(54) **METHOD AND APPARATUS FOR CHANGING DISPLAY OF MERCHANDISE IN SUPERMARKET**

(30) Priority: 18.12.2023 CN 202311753625
(71) Applicant: Hanshow Technology Co., Ltd., Jiaxing, Zhejiang 314031 (CN)
(72) Inventor: SHEN, Ming, Jiaxing, Zhejiang 314031 (CN)
(74) Representative: Boult Wade Tennant LLP
(86) International application number: PCT/CN2024/116768
(87) International publication number: WO 2025/130163

(57) **Abstract**

Disclosed by the present disclosure are a method and an apparatus for changing a display of merchandise in a supermarket. The method includes: receiving latest merchandise display information pushed by a user; performing differential comparison between the latest merchandise display information and most recent merchandise display information to obtain display information differences; obtaining display difference content according to the display information differences and the correlation between the most recent merchandise display information and electronic shelf labels, and pushing the display difference content to the electronic shelf labels involved in the display difference content; sending, after receiving a trigger instruction issued by the user, a presentation instruction to the electronic shelf labels involved in the display difference content, and the presentation instruction is used to trigger the electronic shelf labels to display the display difference content; and sending, after receiving a difference confirmation instruction confirmed by the user according to the display difference content, latest merchandise information to the electronic shelf labels involved in the display difference content, so as to update the presentation of the electronic shelf labels.

## Description

### RELATED APPLICATION

The present disclosure claims priority to Chinese Patent Application No. 202311753625.0 filed on December 18, 2023, which is hereby incorporated by reference in its entirety.

### TECHNICAL FIELD

The present disclosure relates to the technical field of mobile internet, and particularly to a method and an apparatus for changing a display of merchandise in a supermarket.

### BACKGROUND

This section is intended to provide background or context for embodiments of the present disclosure set forth in the claims. The description here is not admitted to be the prior art just because it is included in this section.

Currently, when the merchandise display on supermarket shelves undergo changes, display adjustments heavily rely on display software at headquarters. Headquarters then pushes the latest merchandise display information after display adjustment to stores. Store staff either use handheld Personal Digital Assistants (PDAs) or print display drawings to manually adjust the positions of merchandise on the shelves one by one.

The existing management mode for the display change has the following disadvantages.
1. Staff need to remove merchandise from shelves to carry out display change, resulting in loss of reference objects and low efficiency of display change.
2. Staff rely on the display drawings provided by the headquarters to place merchandise, but they also need to repeatedly confirm placement positions. Position errors will occur without repeated confirmation, which leads to low efficiency and frequent errors.
3. With this approach, there is no guarantee that the staff's execution aligns with the headquarters' requirements, nor is there any way to track compliance. This may lead to merchandise displays not being arranged according to headquarters' instructions, potentially causing sales losses.

### SUMMARY

An embodiment of the present disclosure provides a method for changing a display of merchandise in a supermarket, which achieves high efficiency and high accuracy in merchandise display change. The method includes:
receiving latest merchandise display information pushed by a user;
performing differential comparison between the latest merchandise display information and most recent merchandise display information to obtain display information differences;
obtaining display difference content according to the display information differences and the correlation between the most recent merchandise display information and electronic shelf labels, and pushing the display difference content to the electronic shelf labels involved in the display difference content;
sending, after receiving a trigger instruction issued by the user, a presentation instruction to the electronic shelf labels involved in the display difference content, and the presentation instruction is used to trigger the electronic shelf labels to display the display difference content; and
sending, after receiving a difference confirmation instruction confirmed by the user according to the display difference content, latest merchandise information to the electronic shelf labels involved in the display difference content, so as to update the presentation of the electronic shelf labels.

An embodiment of the present disclosure provides a supermarket merchandise display change apparatus, which achieves high efficiency and high accuracy in merchandise display change. The apparatus includes:
a display interfacing module configured to receive latest merchandise display information pushed by a user;
a display difference analysis module configured to perform differential comparison between the latest merchandise display information and most recent merchandise display information to obtain display information differences;
a display binding module configured to obtain display difference content according to the display information differences and the correlation between the most recent merchandise display information and electronic shelf labels, and push the display difference content to the electronic shelf labels involved in the display difference content;
a display information pushing module configured to send, after receiving a trigger instruction issued by the user, send a presentation instruction to the electronic shelf labels involved in the display difference content, and the presentation instruction is used to trigger the electronic shelf labels to display the display difference content; and
a display execution module configured to send, after receiving a difference confirmation instruction confirmed by the user according to the display difference content, latest merchandise information to the electronic shelf labels involved in the display difference content, so as to update the presentation of the electronic shelf labels.

According to the embodiments of the present disclosure, receiving latest merchandise display information pushed by a user; performing differential comparison between the latest merchandise display information and most recent merchandise display information to obtain display information differences; obtaining display difference content according to the display information differences and the correlation between the most recent merchandise display information and electronic shelf labels, and pushing the display difference content to the electronic shelf labels involved in the display difference content; sending, after receiving a trigger instruction issued by the user, a presentation instruction to the electronic shelf labels involved in the display difference content, and the presentation instruction is used to trigger the electronic shelf labels to present the display difference content; and sending, after receiving a difference confirmation instruction confirmed by the user according to the display difference content, latest merchandise information to the electronic shelf labels involved in the display difference content, so as to update the presentation of the electronic shelf labels. Compared with the mode relying solely on user operation in the prior art, this solution identifies the display information differences, obtains the display difference content by combining the identified display information differences with the correlation between the most recent merchandise display information and the electronic shelf labels, and pushes the display difference content to the electronic shelf labels. It then waits for the trigger instruction to trigger the presentation of the display difference content, so that after a one-click confirmation instruction (i.e., the difference confirmation instruction) is received from the user, the presentation of the electronic shelf labels can be directly updated, thereby achieving higher working efficiency and higher accuracy.

### BRIEF DESCRIPTION OF DRAWINGS

In order to more clearly illustrate the technical solutions in the embodiments of the present disclosure or in the prior art, the drawings to be used in the description of the embodiments or the prior art will be briefly introduced below. Obviously, the drawings involved in the following description only illustrate some embodiments of the present disclosure, and other drawings can be obtained by those of ordinary skill in the art according to these drawings without paying any inventive work. In the drawings:
FIG. 1 illustrates a flowchart of a method for changing a display of merchandise in a supermarket according to an embodiment of the present disclosure;
FIG. 2 illustrates a schematic diagram of an apparatus for changing a display of merchandise in a supermarket according to an embodiment of the present disclosure; and
FIG. 3 illustrates a schematic diagram of a computer device according to an embodiment of the present disclosure.

### DESCRIPTION OF EMBODIMENTS

In order that the objectives, technical solutions and advantages of the embodiments of the present disclosure are clearer, the embodiments of the present disclosure will be further described in detail with reference to the drawings. Herein, the exemplary embodiments of present disclosure and the descriptions thereof are used to explain the present disclosure, but shall not be used as limitations thereto.

The electronic shelf label in the embodiments of the present disclosure refers to a common electronic merchandise price tag used in existing supermarkets, which is capable of page switching and has a flashing Light Emitting Diode (LED) light that can flash.

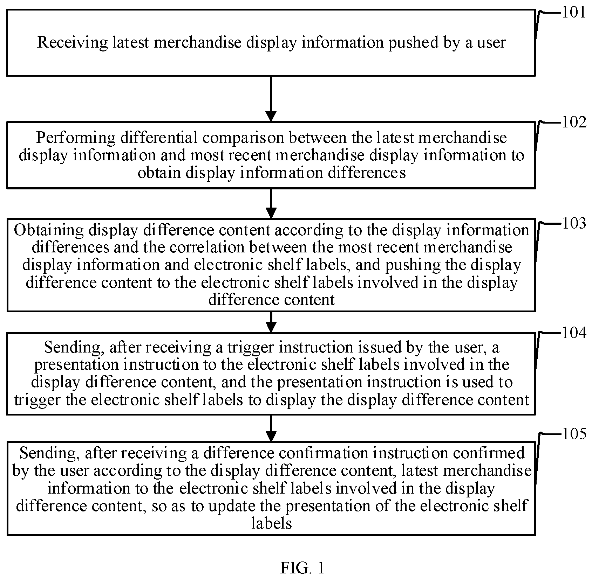

FIG. 1 illustrates a flowchart of a method for changing a display of merchandise in a supermarket according to an embodiment of the present disclosure, including:
Step 101: receiving latest merchandise display information pushed by a user;
Step 102: performing differential comparison between the latest merchandise display information and most recent merchandise display information to obtain display information differences;
Step 103: obtaining display difference content according to the display information differences and the correlation between the most recent merchandise display information and electronic shelf labels, and pushing the display difference content to the electronic shelf labels involved in the display difference content;
Step 104: sending, after receiving a trigger instruction issued by the user, a presentation instruction to the electronic shelf labels involved in the display difference content, and the presentation instruction is used to trigger the electronic shelf labels to display the display difference content; and
Step 105: sending, after receiving a difference confirmation instruction confirmed by the user according to the display difference content, latest merchandise information to the electronic shelf labels involved in the display difference content, so as to update the presentation of the electronic shelf labels.

Compared with the mode relying solely on user operation in the prior art, this solution identifies the display information differences, obtains the display difference content by combining the identified display information differences with the correlation between the most recent merchandise display information and the electronic shelf labels, and pushes the display difference content to the electronic shelf labels. It then waits for the trigger instruction to trigger the presentation of the display difference content, so that after a one-click confirmation instruction (i.e., the difference confirmation instruction) is received from the user, the presentation of the electronic shelf labels can be directly updated, thereby achieving higher working efficiency and higher accuracy.

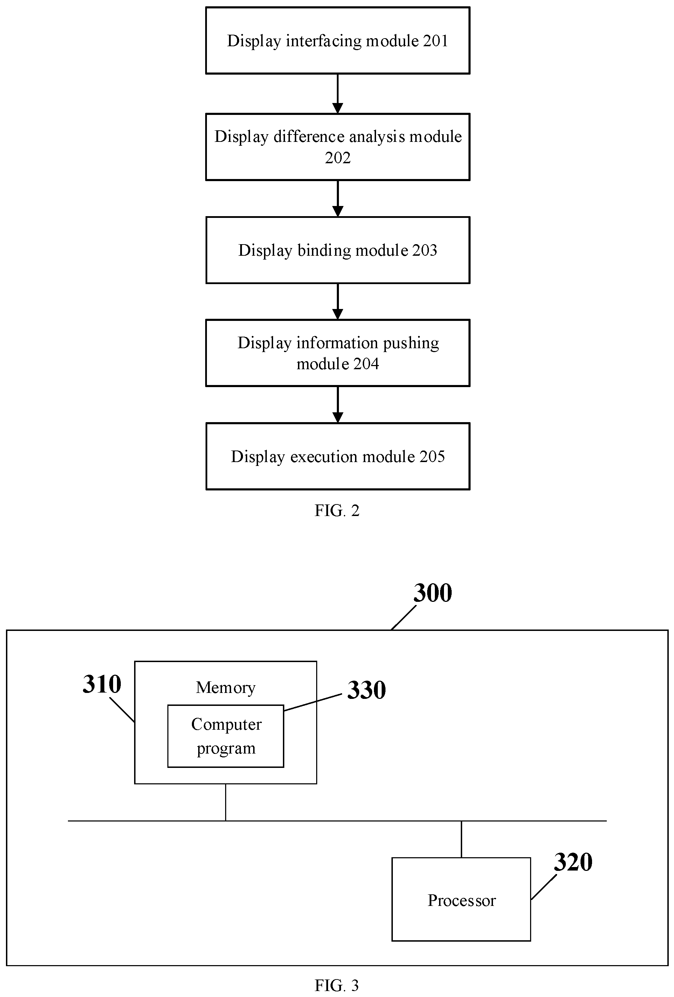

Referring to FIG. 2, an embodiment of the present disclosure further discloses an apparatus for changing a display of merchandise in a supermarket, including:
a display interfacing module 201 configured to receive latest merchandise display information pushed by a user;
a display difference analysis module 202 configured to perform differential comparison between the latest merchandise display information and most recent merchandise display information to obtain display information differences;
a display binding module 203 configured to obtain display difference content according to the display information differences and the correlation between the most recent merchandise display information and electronic shelf labels, and push the display difference content to the electronic shelf labels involved in the display difference content;
a display information pushing module 204 configured to send, after receiving a trigger instruction issued by the user, a presentation instruction to the electronic shelf labels involved in the display difference content, and the presentation instruction is used to trigger the electronic shelf labels to display the display difference content; and
a display execution module 205 configured to send, after receiving a difference confirmation instruction confirmed by the user according to the display difference content, latest merchandise information to the electronic shelf labels involved in the display difference content, so as to update the presentation of the electronic shelf labels.

The above apparatus for changing a display of merchandise in a supermarket for example may be a background system deployed at user headquarters. Each step is described in detail as follows.

In step 101, the latest merchandise display information pushed by the user is received. In an embodiment, the merchandise display information is represented by a shelf planogram, and the shelf planogram includes display information of merchandise on shelves and corresponding position coordinates. Since store displays are subject to changes, the user updates the shelf planogram periodically.

The received latest merchandise display information is stored in the background system.

In step 102, differential comparison is performed between the latest merchandise display information and the most recent merchandise display information to obtain the display information differences.

In an embodiment, the display information differences include merchandise type change information and merchandise position replacement information. For instance, merchandise B may be placed at the original position of merchandise A, or merchandise B and C may be placed at the original position of merchandise A, and the merchandise position replacement information can be generated in each case.

In step 103, the display difference content is obtained according to the display information differences and the correlation between the most recent merchandise display information and the electronic shelf labels, and then pushed to the electronic shelf labels involved in the display difference content. During actual implementation, since the displayed merchandise recorded in the most recent display information are bound to electronic shelf labels installed in stores, and default display positions conform to the requirements of headquarters, the background system establishes association and binding relationships between the displayed merchandise and the in-store electronic shelf labels. According to the display information differences and the correlation between the most recent merchandise display information and the electronic shelf labels, the background system establishes a new merchandise association and renders it into the display difference content.

In an embodiment, the display difference content includes the most recent merchandise display information and the latest merchandise display information of the electronic shelf labels, and the most recent merchandise display information and the latest merchandise display information of the electronic shelf label are presented in a split-screen mode.

To be noted, the display difference content is, for example, a new association relationship, which is determined based on the display information differences and the correlation between the most recent merchandise display information and the electronic shelf labels and includes the most recent merchandise display information and the latest merchandise display information in the electronic shelf labels. For example, when merchandise A is replaced by merchandise B, the electronic shelf label L1 bound to merchandise A will form a new association relationship with merchandise B. Such association relationship is rendered into image information including but not limited to display information such as merchandise names and merchandise bar codes. For another example, when merchandise A is replaced by merchandise B and merchandise C, the electronic shelf label L1 bound to merchandise A will form a new association relationship with merchandise B and merchandise C. Such association relationship is rendered into image information including but not limited to merchandise names and merchandise bar codes, and two sets of merchandise display information are arranged and presented in a left-right split-screen mode.

In step 104, after a trigger instruction issued by the user is received, a presentation instruction is sent to the electronic shelf labels involved in the display difference content, and the presentation instruction is used to trigger the electronic shelf labels to display the display difference content.

In an embodiment, the display difference content is stored in a multi-page storage area of the electronic shelf label. The electronic shelf label is triggered by external trigger conditions to display relevant content at appropriate time or upon specific events. The triggering may be implemented via the user's PDA or by the background system. The display difference content may also be directly pushed to the display screen of the electronic shelf label for direct presentation. In general, each electronic shelf label can store multiple pages of display content, and one page may be used to store the above display difference content. Sending the presentation instruction to the electronic shelf labels involved in the display difference content in step 104 is triggered by the background system.

By the above step, the displayed merchandise is presented through the functions of multi-page storage and multi-merchandise split-screen presentation of the electronic shelf labels: the changes of the merchandise display positions can be realized through the above functions. For instance, the merchandise display positions can be interchanged, e.g., merchandise A shifts to the position of merchandise B, merchandise B shifts to the position of merchandise C, and merchandise C shifts to the position of merchandise A. Such change information is stored in the labels with a multi-page form. When new merchandise is added, prompts for increased display positions can be realized by presenting the information of multiple merchandise on a single screen.

In step 105, after a difference confirmation instruction confirmed by the user according to the display difference content is received, the latest merchandise information is sent to the electronic shelf labels involved in the display difference content, so as to update the presentation of the electronic shelf labels. Step 105 triggers the presentation of the display difference content via the background system. In addition, the difference confirmation instruction may be issued from the user's PDA, which enables the user to trigger the display difference content through the PDA for presentation. The difference confirmation instruction is a one-click confirmation instruction.

After the display difference content is presented, the user can quickly adjust and confirm the shelf merchandise display according to the presented content. Once the display adjustment conforms to the display difference content of the electronic shelf labels, the user can complete the confirmation of all display differences and changes via the one-click display confirmation function of the PDA or the background system.

The background system sends the latest merchandise information through a base station to the electronic shelf labels involved in the display difference content, so as to complete the whole display change action and present the latest merchandise information.

The above step enables one-click confirmation of the display position change via the PDA. The user adjusts merchandise positions with reference to the display information prompts on the electronic shelf labels, and finally confirms the display change via one-click confirmation on the PDA, without making any merchandise rebinding operation, which greatly enhances the working comfort and efficiency.

In an embodiment, after receiving the latest merchandise display information pushed by the user, the method further includes:
pushing the latest merchandise information to the electronic shelf labels involved in the merchandise display information to update the presentation of the electronic shelf labels.

The above step supports direct push of the latest merchandise information to be presented.

In step 105, the difference confirmation instruction confirmed by the user according to the display difference content is received, which serves as the one-click confirmation instruction. In addition, if the user considers the display difference content incorrect, then instead of performing the one-click confirmation, the purpose of display change must be achieved by rebinding the electronic shelf labels. The PDA and the background system may record the rebinding process to obtain store display error information, which is synchronized to headquarters for subsequent management. For instance, electronic shelf label L1 should be switched from merchandise A to merchandise B, but the store rebinds it to merchandise C, then the display error information of merchandise B and merchandise C will be recorded accordingly.

The above step enables display error reporting. When the user (e.g. store staff herein) does not execute a one-click display confirmation, the store's display information can be checked via the staff's merchandise rebinding action, and display error information will be sent to the background system or notified to user.

In an embodiment, the display interfacing module is further configured to push:
after receiving the latest merchandise display information pushed by the user, the latest merchandise information to the electronic shelf labels involved in the merchandise display information, so as to update the presentation of the electronic shelf labels.

In an embodiment, the display execution module is further configured to send:
after receiving an association relationship rebound by the user according to the display difference content, the merchandise display information involved in the rebound association relationship to the electronic shelf labels in the rebound association relationship.

To sum up, the method and apparatus proposed by the embodiments of the present disclosure achieve the following advantageous effects.
(1) The electronic shelf labels receive display change information. New display information is directly sent to the electronic shelf labels for presentation upon display change, thereby ensuring consistent display requirements between headquarters and stores.
(2) The displayed merchandise is presented through the functions of multi-page storage and multi-merchandise split-screen presentation of the electronic shelf labels: the changes of the merchandise display positions can be realized through the above functions. For instance, the merchandise display positions can be interchanged, e.g., merchandise A shifts to the position of merchandise B, merchandise B shifts to the position of merchandise C, and merchandise C shifts to the position of merchandise A. Such change information is stored in the labels with a multi-page form. When new merchandise is added, prompts for increased display positions can be realized by presenting the information of multiple merchandise on a single screen.
(3) One-click confirmation of the display position change via the PDA: staff adjusts the merchandise positions with reference to the display information prompts on the electronic shelf labels, and finally confirms the display change via one-click confirmation on the PDA, without making any merchandise rebinding operation, which greatly enhances the working comfort and efficiency.
(4) Display error reporting: when the store does not execute a one-click display confirmation, the store's display information can be checked via the staff's merchandise rebinding action, and display error information will be sent to the background system or notified to headquarters.

An embodiment of the present disclosure further provides a computer device. FIG.3 illustrates a schematic diagram of a computer device according to an embodiment of the present disclosure. The computer device 300 includes a memory 310, a processor 320, and a computer program 330 stored in the memory 310 and executable in the processor 320, and when executing the computer program 330, the processor 320 implements the method for changing the display of merchandise in the supermarket.

An embodiment of the present disclosure further provides a computer-readable storage medium, and the computer-readable storage medium stores a computer program which when executed by a processor, implements the method for changing the display of merchandise in the supermarket.

An embodiment of the present disclosure further provides a computer program product, including a computer program which when executed by a processor, implements the method for changing the display of merchandise in the supermarket.

Those skilled in the art shall appreciate that any embodiment of the present disclosure can be provided as a method, a system or a computer program product. Therefore, the present disclosure can take the form of a full hardware embodiment, a full software embodiment, or an embodiment combining software and hardware. Moreover, the present disclosure can take the form of a computer program product implemented on one or more computer usable storage mediums (including, but not limited to, a magnetic disc memory, CD-ROM, optical storage, etc.) containing therein computer usable program codes.

The present disclosure is described with reference to a flowchart and/or a block diagram of the method, device (system) and computer program product according to the embodiments of the present disclosure. It shall be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce means for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device which realizes function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flowchart and/or one or more blocks in the block diagram.

The specific embodiments further make detailed illustrations to the objectives, technical solutions and advantageous effects of the present disclosure. It shall be understood that those described above are only specific embodiments of the present disclosure and are not intended to limit the protection scope of the present disclosure. Any modification, equivalent substitution or improvement made within the spirit and principle of the present disclosure shall fall within the protection scope of the present disclosure.

## Claims

1. A method for changing a display of merchandise in a supermarket, comprising:
receiving latest merchandise display information pushed by a user;
performing differential comparison between the latest merchandise display information and most recent merchandise display information to obtain display information differences;
obtaining display difference content according to the display information differences and the correlation between the most recent merchandise display information and electronic shelf labels, and pushing the display difference content to the electronic shelf labels involved in the display difference content;
sending, after receiving a trigger instruction issued by the user, a presentation instruction to the electronic shelf labels involved in the display difference content, wherein the presentation instruction is used to trigger the electronic shelf labels to display the display difference content; and
sending, after receiving a difference confirmation instruction confirmed by the user according to the display difference content, latest merchandise information to the electronic shelf labels involved in the display difference content, so as to update the presentation of the electronic shelf labels.

2. The method according to claim 1, wherein the merchandise display information is represented by a shelf planogram, wherein the shelf planogram comprises display information of merchandise on shelves and corresponding position coordinates.

3. The method according to claim 1, wherein the display information difference comprises merchandise type change information and merchandise position replacement information.

4. The method according to claim 1, wherein the display difference content comprises the most recent merchandise display information and the latest merchandise display information of the electronic shelf label, wherein the most recent merchandise display information and the latest merchandise display information of the electronic shelf label are presented in a split-screen mode.

5. The method according to claim 1, wherein the display difference content is stored in a multi-page storage area of the electronic shelf label.

6. The method according to claim 1, wherein the trigger instruction is issued by the user's Personal Digital Assistant (PDA), and the difference confirmation instruction is issued by the user's PDA.

7. The method according to claim 1, wherein after receiving the latest merchandise display information pushed by the user, the method further comprises:
pushing the latest merchandise information to the electronic shelf labels involved in the merchandise display information to update the presentation of the electronic shelf labels.

8. The method according to claim 1, further comprising:
sending, after receiving an association relationship rebound by the user according to the display difference content, the merchandise display information involved in the rebound association relationship to the electronic shelf labels in the rebound association relationship.

9. An apparatus for changing a display of merchandise in a supermarket, comprising:
a display interfacing module configured to receive latest merchandise display information pushed by a user;
a display difference analysis module configured to perform differential comparison between the latest merchandise display information and most recent merchandise display information to obtain display information differences;
a display binding module configured to obtain display difference content according to the display information differences and the correlation between the most recent merchandise display information and electronic shelf labels, and push the display difference content to the electronic shelf labels involved in the display difference content;
a display information pushing module configured to send, after receiving a trigger instruction issued by the user, a presentation instruction to the electronic shelf labels involved in the display difference content, wherein the presentation instruction is used to trigger the electronic shelf labels to display the display difference content; and
a display execution module configured to send, after receiving a difference confirmation instruction confirmed by the user according to the display difference content, latest merchandise information to the electronic shelf labels involved in the display difference content, so as to update the presentation of the electronic shelf labels.

10. A computer device, comprising a memory, a processor, and a computer program stored in the memory and executable in the processor, wherein when executing the computer program, the processor implements the method according to any one of claims 1 to 8.

11. A computer-readable storage medium, wherein the computer-readable storage medium stores a computer program which when executed by a processor, implements the method according to any one of claims 1 to 8.

12. A computer program product, comprising a computer program which when executed by a processor, implements the method according to any one of claims 1 to 8.
